# EUROPEAN PATENT APPLICATION

(11) **EP 1 686 662 A2**
(43) Date of publication of application: **02.08.2006**
(21) Application number: 05018568.5
(22) Date of filing: 26.08.2005
(51) Int. Cl.: H01R 13/646

(54) **Detachable antenna device for portable terminal**

(30) Priority: 26.01.2005 KR 2005007144
(71) Applicant: Samsung Electronics Co., Ltd., Yeongtong-gu Suwon-si, Gyeonggi-do (KR)
(72) Inventor: Cha, Kwang-Hwan, Yeongtong-gu Suwon-si Gyeonggi-do (KR)
(74) Representative: Grünecker, Kinkeldey, Stockmair & Schwanhäusser Anwaltssozietät

(57) **Abstract**

Disclosed herein is detachable antenna device for a portable terminal that includes a socket installed on any one of the terminal and a radiation unit of the antenna device, a plug installed on the other one of the terminal and the radiation unit of the antenna device and adapted to be coupled to the socket, and a position retaining means for limiting the rotation of the radiation unit when the plug is coupled to the socket. The detachable antenna device for a portable terminal can be mounted on a terminal as desired, and particularly, it can be used for TV watching and performing GPS information terminal functions. It can also be detached from the terminal in a normal state for improved compactness and portability of the terminal. The connector of the antenna device is prevented from being worn and damaged by an external factor to improve the durability and retain the plug in a more stable manner.

## Description

### BACKGROUND OF THE INVENTION

### 1. Field of the Invention

The present invention relates to a portable terminal, and more particularly to a detachable antenna device for a portable terminal.

### 2. Description of the Related Art

In general, a portable terminal provides electrical communication between users or between a user and a service provider, and is carried for various services including voice communication, short message service, multimedia services, and entertainment services.

According to their appearance, portable terminals are classified into bar-type terminals having a transmitter unit, a receiver unit, and a data input/output device positioned on a single housing; flip-type terminals having a transmitter unit, a receiver unit, and a data input/output device positioned on a single housing, as in the case of the bar-type terminals, as well as a flip cover attached thereto to expose/hide a data input device such as a keypad; and folder-type terminals having a transmitter unit, a receiver unit, and a data input/output device respectively positioned on a suitable one of a pair of foldable housings. Recently, sliding-type, popup-type, and swing-type terminals have appeared and been commercialized in line with consumers' diversified tastes. These variously portable terminals can be easily understood by those skilled in the art.

Meanwhile, not only the appearance of portable terminals, but also the function thereof has been widely expanded. Such a trend is accelerated by development in telecommunication technology.

Telecommunication services include voice communication and short sentence message transmission, which have appeared in the early stage, as well as multimedia services (e.g., motion video), video communication, mobile banking, TV broadcast reception, and GPS, which have been recently commercialized.

As the domain of telecommunication services expands in this manner, portable terminals are equipped with various additional devices, or existing components are incessantly improved. For example, portable terminals tend to be equipped with a camera device for video communication and photographing. In addition, recent portable terminals are provided with a high-quality color display device for multimedia services and TV broadcast watching, instead of a monochrome LCD display device, which had been used to display character information in the early stage.

As portable terminals incorporate additional functions of TV broadcast reception and GPS information terminal, in addition to telecommunication services, an additional antenna device is necessary. This is because the frequency band allocated to telecommunication services is different from that allocated to TV broadcasting and GPS.

Adding an antenna device to a portable terminal for TV broadcast reception and GPS information terminal functions, however, is a considerable obstacle to making the terminal in a compact size. Furthermore, there is no need to maintain a constant transmission/reception state between a portable terminal and a repeater station of the service provider (or base station) to use TV broadcast reception and GPS information terminal functions, in contrast to the case of telecommunication services. An antenna device permanently mounted on a portable terminal for such services, therefore, degrades the portability of the terminal as well as the compactness.

### SUMMARY OF THE INVENTION

Accordingly, the present invention has been made to solve the above-mentioned problems occurring in conventional systems, and it is an object of the present invention to provide a detachable antenna device for a portable terminal capable of being detached from the terminal and, when mounted on the terminal, continuously retained thereon in a stable manner wherein simultaneously the portability of the terminal is improved as well as its compactness.

In order to accomplish this object, there is provided a detachable antenna device for a portable terminal including a socket installed on any one of the terminal and a radiation unit of the antenna device, a plug installed on the other one of the terminal and the radiation unit of the antenna device and adapted to be coupled to the socket, and a position retaining means for limiting the rotation of the radiation unit when the plug is coupled to the socket.

### BRIEF DESCRIPTION OF THE DRAWINGS

The above and other objects, features, and advantages of the present invention will be more apparent from the following detailed description taken in conjunction with the accompanying drawings, in which:
FIG. 1 is a perspective view showing a detachable antenna device for a portable terminal according to a preferred embodiment of the present invention;
FIG. 2 is a sectional side view showing a connector of the antenna device shown in FIG. 1;
FIG. 3 is a side view showing a connector of the antenna device shown in FIG. 1;
FIG. 4 is another side view showing a connector of the antenna device shown in FIG. 1;
FIG. 5 is a perspective view showing a socket of the antenna device shown in FIG. 1, installed on a terminal;
FIG. 6 is a sectional side view showing a socket of the antenna device shown in FIG. 1, without the plug coupled to the socket;
FIG. 7 is a perspective view showing a plug of the antenna device shown in FIG. 1, installed on a radiation unit of the antenna device; and
FIG. 8 is a sectional view showing a plug of the antenna device shown in FIG. 1.

### DETAILED DESCRIPTION OF THE PREFERRED EMBODIMENTS

Hereinafter, preferred embodiments of the present invention will be described with reference to the accompanying drawings. In the following description of the present invention, a detailed description of known functions and configurations incorporated herein is omitted to avoid making the subject matter of the present invention unclear.

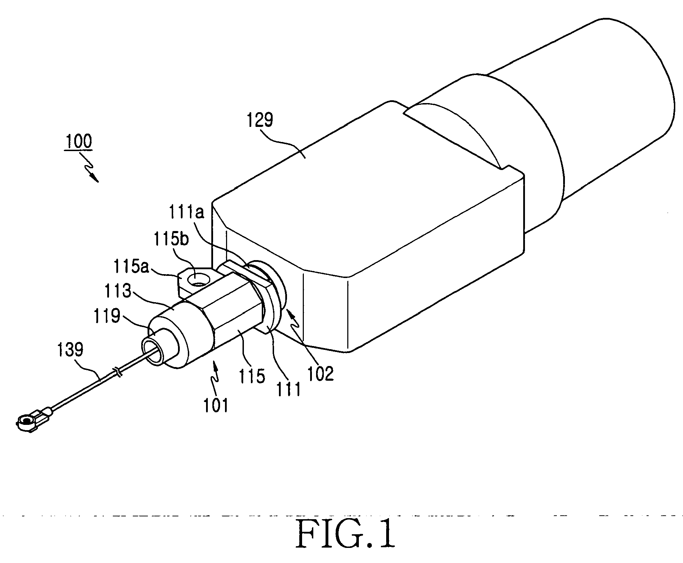

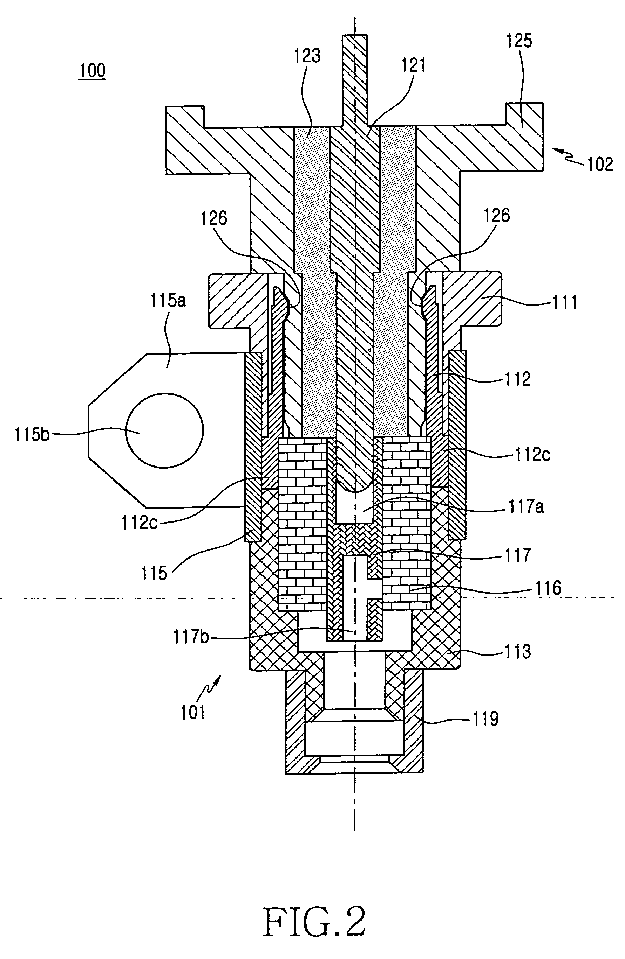

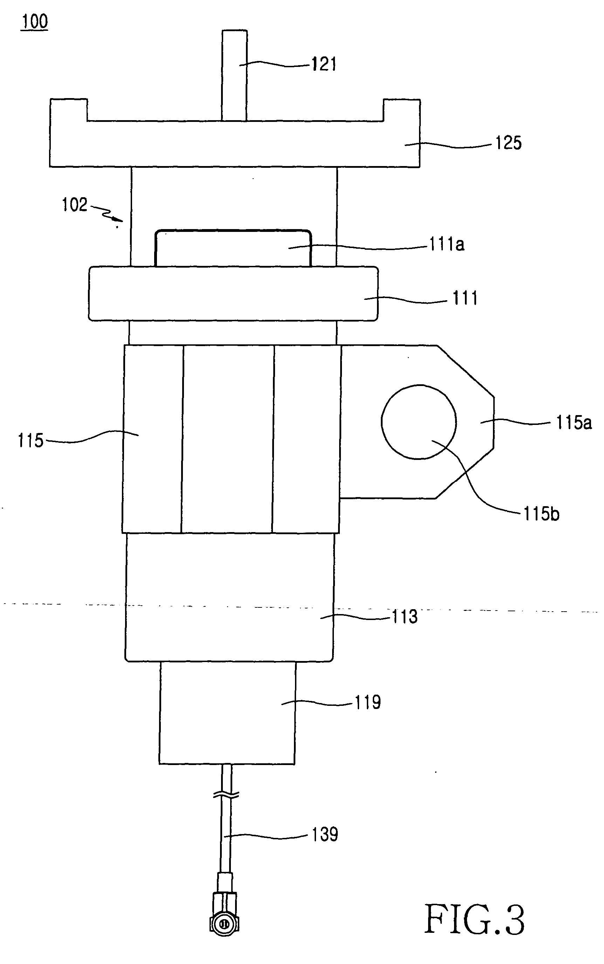

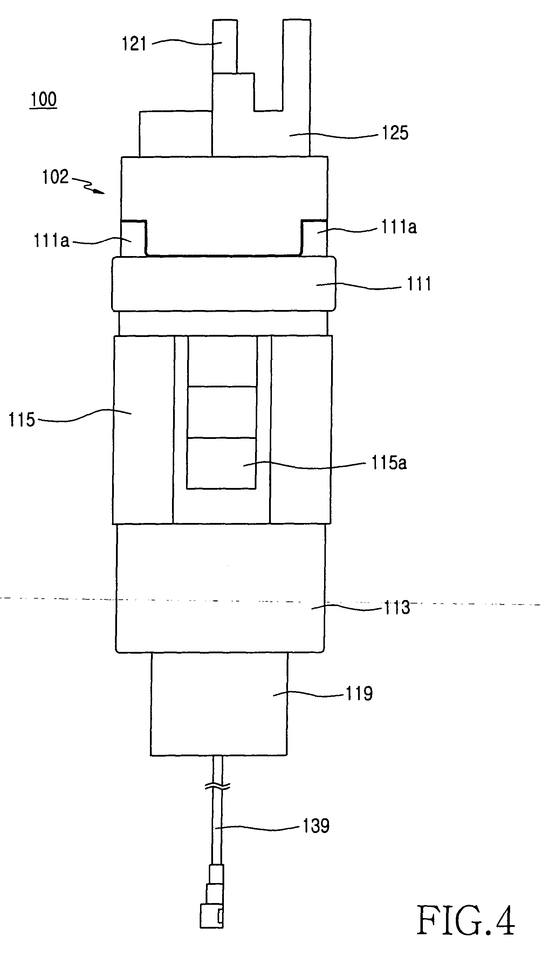

FIG. 1 is a perspective view showing a detachable antenna device for a portable terminal according to a preferred embodiment of the present invention and FIGs. 2 to 4 show a connector 100 of the antenna device shown in FIG. 1, respectively.

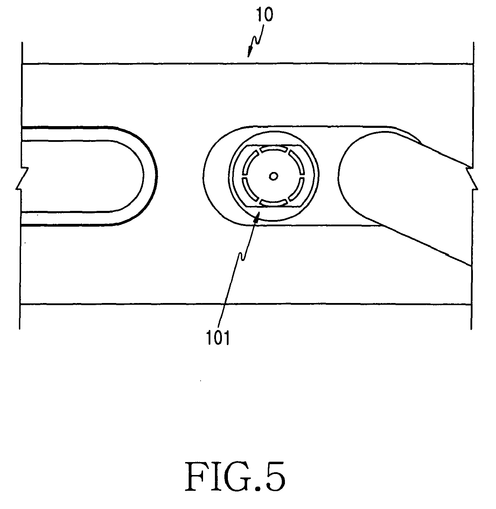

As shown in FIGs. 1 to 4, the antenna device has a connector 100 including a socket 101 installed on a terminal and a plug 102 installed on an antenna radiation unit 129 to be connected to the socket 101. The connector 100 of the antenna device enables the radiation unit 129 to be attached to and detached from the terminal 10 (shown in FIG. 5) by means of the socket 101 and the plug 102. The connector 100 has a position retainer for limiting the rotation of the plug 102 when it is connected to the socket 101.

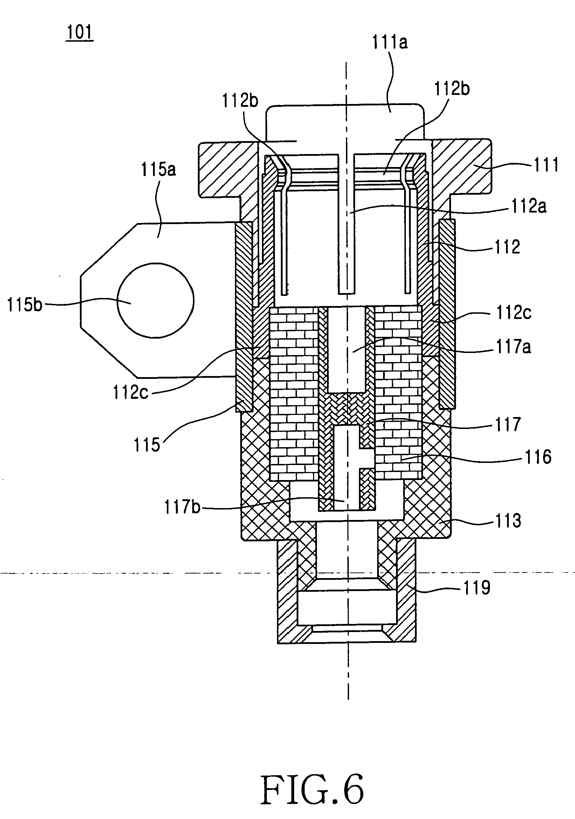

Referring to FIGs. 2 and 6, the socket 101 includes an insulation tube 111, a retaining tube 113, a coupling tube 115, a holder 112, a first insulator 116, and a joiner 117.

The insulation tube 111, the retaining tube 113, and the coupling tube 115 constitute a socket housing as a whole. The retaining tube 113 is positioned in a longitudinal direction while facing an end of the insulation tube 111 and is coaxially aligned with the insulation tube 111. The coupling tube 115 is coupled in such a manner that it simultaneously encloses the ends of the insulation and retaining tubes 111 and 113, respectively, to constitute a socket housing. The coupling tube 115 has a fastening piece 115a extending from the outer peripheral surface thereof and a fastening hole 115b formed on the fastening piece 115a and provides a retainer for rigidly retaining the socket 101 when it is installed on the terminal 10.

The holder 112 is installed in the insulation tube 111 while being coaxially aligned therewith. When the plug 102 is coupled to the socket 101, the holder 112 compresses the outer peripheral surface of the plug 102 and prevents it from being released from the socket 101. The holder 112 has at least one slit 112a (FIG. 6) extending from the upper end thereof and can compress the outer peripheral surface of the plug 102 with its own elastic force.

The holder 112 has a stopper 112b protruding from the inner peripheral surface of the upper end thereof while being arranged along the circumferential direction. The stopper 112b is adapted to engage a stopper groove 126 (FIG. 2) formed on the outer peripheral surface of the plug 102. Together with the elastic force from the holder 112, the stopper groove 126 prevents the plug 102 from being released from the socket 101.

The holder 112 has a supporter 112c formed on the peripheral surface of the lower end thereof while protruding along the circumferential direction. The supporter 112c is interposed between the insulation and retaining tubes 111 and 113 and stabilizes the holder 112 installed in the insulation tube 111. The outer peripheral surface of the supporter 112c may contact the inner peripheral surface of the coupling tube 115.

The first insulator 116 is fixed to the inner peripheral surface of the retaining tube 113 in a press fit mode, with an- end thereof being coupled to the inner peripheral surface of the holder 112 in a press fit mode. Both ends of the supporter 112c are supported by the insulation and retaining tubes 111 and 113 and the outer and inner peripheral surfaces thereof contact the coupling tube 115 and the first insulator 116 to retain the holder 112 inside the socket housing.

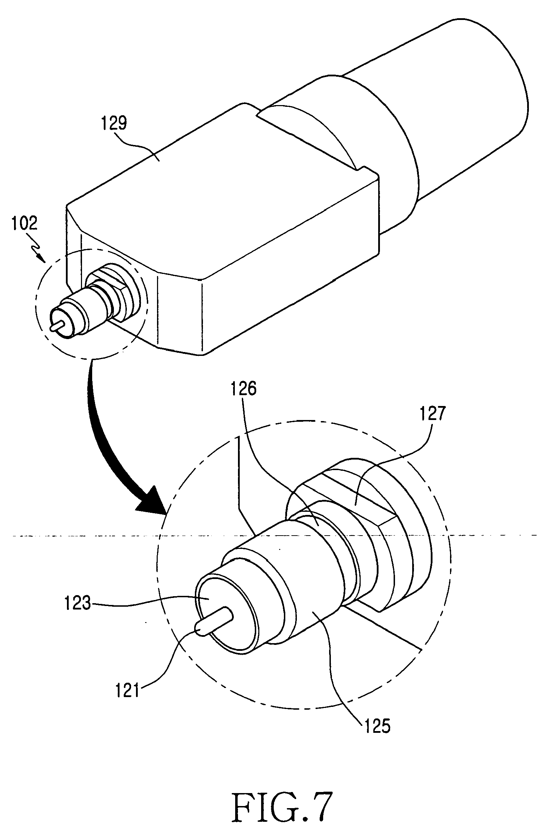

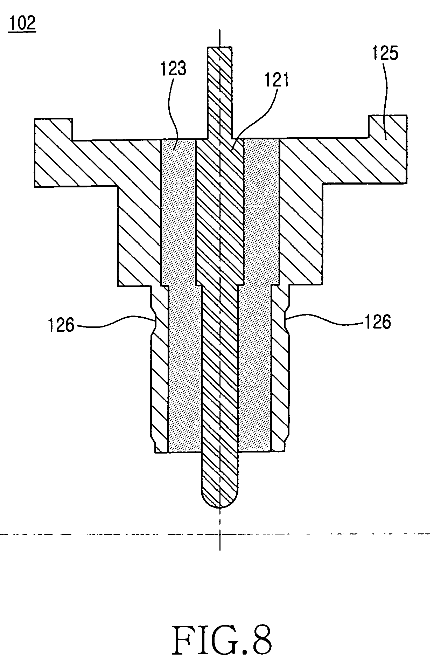

The joiner 117 is installed in the socket housing while being coupled to the interior of the first insulator 116. The joiner 117 may be coupled to the interior of the first insulator 116 in a press fit mode. The joiner 117 has a plug connection hole 117a formed on an end thereof and a cable connection hole 117b formed on the other end thereof. Thus, the joiner 117 electrically connects a signal line 121 (shown in FIGs. 7 and 8) on the radiation unit 129 side of the antenna device to the signal cable 139 connected to the terminal-side circuit devices.

The insulation tube 111, the retaining tube 113, the coupling tube 115, the holder 112, the first insulator 116, and the joiner 117 are coaxially aligned. The retaining tube 113 and the holder 112 are made up of a conductive material and provide the socket 101 with a ground. The joiner 117 is made up of a conductive material and connects the signal line 121 of the plug 101 to the terminal-side signal cable 139.

Referring to FIGs. 7 and 8, the plug 102 includes a signal line 121, a second insulator 123, and a guide 125. The signal line 121 provides a path for transmitting or receiving signals to or from the terminal via the radiation unit 129 of the antenna device and is enclosed by the second insulator 123. The second insulator 123 encloses the outer peripheral surface of the signal line 121 and insulates the guide 125 from the signal line 121.

The guide 125 is made up of a conductive material and provides the antenna device with a ground. The guide 125 also provides a means for connecting the radiation unit 129 to the terminal 10. Particularly, the plug 102 can be coupled to the socket 101 by the guide 125. The guide 125 is coupled to the holder 112 of the socket 101 and the stopper groove 126 formed on the outer peripheral surface of the plug 102 is, in practice, formed on the outer peripheral surface of the guide 125.

When the plug 102 is coupled to the socket 101, consequently, the guide 125, the holder 112, and the retaining tube 113 provide the antenna device with a ground for connection to the ground constituted by the circuit devices of the terminal via the signal cable 139 (FIG. 1).

The position retainer of the antenna device configured as above includes a support protrusion 111 a formed on the socket 101 and a corresponding support groove 127 (FIGs. 6 and 7) formed on the plug 102. At least one support protrusion 111 a, preferably a pair of support protrusions 111a are symmetrically positioned about the circumference of the socket 101.

When the plug 102 is coupled to the socket 101, the support protrusion 111 a completely engages the support groove 127 so that the plug 102 is completely coupled to the socket 101. As the support protrusion 111 a engages the support groove 127, the rotation of the plug 102 coupled to the socket 101 is limited. The radiation unit 129 of the antenna device thus can be continuously retained on the terminal in a stable manner.

When the connector 100 of the antenna device is configured as above, the holder 112 having a number of slits 112a formed thereon to compress the outer peripheral surface of the plug is positioned inside the socket 101 to prevent it from being contaminated or damaged by an external force.

The signal line 121 of the radiation unit 129 is enclosed by the second insulator 123 and the guide 125 so that the signal line 121 is protected from being damaged even when the radiation unit 129 is separated from the socket 101. Particularly, the second insulator 123 and the guide 125 enclose and support the signal line 121 to protect it from an external force.

As mentioned above, the inventive detachable antenna device for a portable terminal can be mounted on a terminal as desired, and particularly, it can be used for TV watching and GPS information terminal functions. It can also be detached from the terminal in a normal state for improved compactness and portability of the terminal. A plug and a holder for compressing the outer peripheral surface of the plug are installed on a socket so that the plug can be easily attached to and detached from the socket and can be continuously retained in a stable manner when coupled to the socket. A position retainer for limiting the rotation of the radiation unit avoids wear due to friction for improved durability and causes the plug to be retained in a more stable manner. When a portable terminal is provided with a detachable antenna device configured as above, separate from an antenna device for telecommunication services, TV broadcasting reception and GPS information terminal functions can be incorporated without degrading the compactness or portability of the terminal. When the holder and the signal line of the radiation unit are installed, the holder is positioned inside the socket and the signal line is enclosed by an insulator and a guide so that components constituting the connector are prevented from being damaged by an external force or contaminated by an alien substance for improved durability of the connector of the antenna device.

While the invention has been shown and described with reference to certain preferred embodiments thereof, it will be understood by those skilled in the art that various changes in form and details may be made therein without departing from the scope of the invention as defined by the appended claims.

## Claims

1. A detachable antenna device for a portable terminal, comprising:
a socket (101) installed on any one of the terminal and a radiation unit (129) of the antenna device;
a plug (102) installed on the other one of the terminal and the radiation unit of the antenna device and adapted to be coupled to the socket (101); and
a position retainer (111a,127) for limiting rotation of the radiation unit when the plug is coupled to the socket.

2. The detachable antenna device for a portable terminal as claimed in claim 1, wherein the position retainer (111 a, 127) comprises at least one support protrusion (111a) formed on the socket (101) and a support groove (127) formed on an outer peripheral surface of the plug (102) to engage the support protrusion.

3. The detachable antenna device for a portable terminal as claimed in claim 1, wherein the socket (101) is installed on the terminal and has a fastening piece (115a) extending from an outer peripheral surface thereof.

4. The detachable antenna device for a portable terminal as claimed in claim 1, further comprising a holder (112) installed within the socket (101) to compress an outer peripheral surface of an end of the plug (102) coupled to the socket, the holder (112) having at least one slit (112a) extending from an upper end thereof along a longitudinal direction thereof.

5. The detachable antenna device for a portable terminal as claimed in claim 4, further comprising a stopper (112b) protruding from an inner peripheral surface of the upper end of the holder (112) and a stopper groove (126) formed on the outer peripheral surface of the plug (102) along a circumferential direction to engage the stopper when the plug is coupled to the socket.

6. The detachable antenna device for a portable terminal as claimed in claim 1, wherein the socket (101) comprises an insulation tube (111), a retaining tube (113) coaxially aligned with the insulation tube with an end thereof facing an end of the insulation tube, and a coupling tube (115) coupled in such a manner that it encloses an outer peripheral surface of ends of the insulation and retaining tubes (111,113), respectively, to constitute a socket housing together with the insulation and retaining tubes.

7. The detachable antenna device for a portable terminal as claimed in claim 6, wherein the coupling tube (115) has a fastening piece (115a) extending from the outer peripheral surface thereof.

8. The detachable antenna device for a portable terminal as claimed in claim 6, further comprising a holder (112) installed within the socket (101) to compress the outer peripheral surface of an end of the plug (102) coupled to the socket (101), the holder having at least one slit (112a) extending from an upper end thereof along the longitudinal direction thereof.

9. The detachable antenna device for a portable terminal as claimed in claim 8, further comprising a supporter (112c) formed on a lower end of the holder (112) to be interposed between the insulation and retaining tubes (111,113).

10. The detachable antenna device for a portable terminal as claimed in claim 6, further comprising a first insulator (116) coupled to an inner peripheral surface of the retaining tube (113) in a press fit mode.

11. The detachable antenna device for a portable terminal as claimed in claim 6, further comprising a first insulator (116) coupled to an inner peripheral surface of the retaining tube (113) in a press fit mode and a joiner (117) coupled to an inner peripheral surface of the first insulator (116) in a press fit mode to be electrically connected to a signal line (121) of the plug (102).

12. The detachable antenna device for a portable terminal as claimed in claim 11, further comprising a signal cable (139) connected to the joiner (117) to electrically connect the joiner to circuit devices of the terminal.

13. The detachable antenna device for a portable terminal as claimed in claim 1, wherein the plug (102) comprises a signal line (121), a second insulator (123) provided to enclose the outer peripheral surface of the signal line (121), and a guide (125) provided to enclose the outer peripheral surface of the insulator (123).

14. The detachable antenna device for a portable terminal as claimed in claim 13, wherein the guide (125) provides the plug with a ground.
